# EUROPEAN PATENT APPLICATION

(11) **EP 3 958 510 A1**
(43) Date of publication of application: **23.02.2022**
(21) Application number: 20191385.2
(22) Date of filing: 17.08.2020
(51) Int. Cl.: H04L 12/26, G05B 23/02

(54) **DISTRIBUTED END-TO-END MONITORING IN INDUSTRY AND CONTROL NETWORKS**

(71) Applicant: Siemens Aktiengesellschaft, 80333 München (DE)
(72) Inventor: The designation of the inventor has not yet been filed

(57) **Abstract**

The invention discloses a system for end-to-end monitoring of services in a converged network comprising an industrial control network (27) and an IT network (16), the system comprising:
- a measurement backend module (1),
- at least one process control component (12), comprising an OT data collection module (8) which is designed
• to monitor data packet streams exchanged between the process control component (12) and devices (13) it controls,
• to capture measurement data and statistics of the monitored data packet streams and
• to deliver the measurement data and the statistics to a data conversion module (10),

- at least one OT data collection configuration module (9), designed to define a principal working mode of the OT data collection module (8), and
- the data conversion module (10), designed
• to collect the measurement data and the statistics from the OT data collection module (8) for conversion according to a definable configuration and
• to forward the converted measurement data and converted statistics to the measurement backend module (1) for further processing.

The invention discloses a related automatic method for end-to-end monitoring of services in a converged network comprising an industrial control network (27) and an IT network (16), as well.

## Description

### FIELD OF THE INVENTION

The present invention relates to a system and an automated method for end-to-end monitoring of services in a converged network comprising an industrial control network and an IT network.

### BACKGROUND OF THE INVENTION

While OT (Operational Technology) and IT (Information Technology) networks are converging, the number of industrial services and application environments with endpoints in IT, as well as OT networks increase. These networks are a complex orchestration of different applications and services operated and used by different stakeholders, which pose QoS (Quality of Service) requirements on the underlying infrastructure.

Common monitoring systems are often limited to devices and/or features of specific manufacturers so that end-to-end service quality assessment is not possible in converged networks. To ensure seamless operations, a comprehensive end-to-end (E2E) monitoring of industrial services and applications is required.

Thus, the status of the data flow of interest needs to be monitored between endpoints on PLC (Programmable Logic Controller) at field level, edge-layer, IT infrastructures and endpoints in the cloud. A typical approach in IT is the deployment of measurement agents collecting data of different endpoints distributed in the network.

Such a simple deployment of measurement agents into industry networks is not possible, as special protocols and special hardware architectures exist (e.g. a PLC cannot easily run clients/agents as it is known from standard computer architectures). Also, interference of measurement traffic with existing high priority control traffic is not desired when active measurements are executed in critical networks. Only measuring the standard ICMP / IP data traffic between edge devices and application endpoints in IT systems / cloud does not allow for assessing the quality of the industrial services with endpoints in the OT network (at field level).

The state-of-the-art approach of End-to-End (E2E) network monitoring is IT driven. Monitoring agents are defined and implemented for typical IT equipment like laptops, servers or datacentre cloud hosting platforms. The agents are acting in a passive or active mode. The agents can listen on the line and analyse the passed through traffic. Or an active synthetic test pattern is created and sent to a defined target.

The collected data are evaluated locally with the agents and sent to the central backend service. On the backend platform the data are stored, labelled and prepared for the web-based view, reachable via the Web worldwide. The agents are controlled by a central platform which is normally hosted within the cloud but as option also onsite. Via this platform new test patterns for new test paths can be created and started between agents or from agents to specific test target, such as web servers.

These tests identify on the path between test source and test targets via a routed network the available connectivity, number of hops, amount of delay, route changes, bandwidth in use or available, E2E capacity, data loss, data jitter, date round trip time and also application oriented parameters as voice loss, voice jitter and MOS (Mean Opinion Scores) dependent on different voice codes.

Via an E2E Monitoring service also the availability of network services, domain name services or the performance of cloud-based firewalls can be monitored. These solutions currently do not address process automation networks where special control network topologies, industrial protocols, specialized industrial applications and specialized devices and HW (e.g. PLCs and Intelligent Electronic Devices (IED)) are present.

Currently no E2E monitoring solution exists which monitors the complete network paths from the field level or shop floor over industrial edge network to the cloud or to external factory networks itself. And no solution integrates the collected data in a common view for a comprehensive E2E analysis. Currently the IT world and the shop floor automation world are strictly separated.

### SUMMARY OF THE INVENTION

The objective of the present invention is to provide a solution for end-to-end monitoring in OT and IT networks.

To accomplish the objective, the present invention provides a solution according to the independent claims. Advantageous embodiments are provided in the dependent claims.

The present invention composes a system that creates special measurement procedures and interfaces, so that the typical applications and protocols of industrial control networks (e.g. PROFInet, GOOSE) can be monitored as well. The system combines measurement clients in IT domains with special procedures and software components in the OT domain, so that both measurement data can be aggregated and combined in the measurement backend by an analytics engine and allows for E2E monitoring of industrial services.

The present invention allows an assessment of the industrial service quality during runtime from the service endpoints view. This is of paramount importance when problems occur in customer networks and the "real problems" can be identified fast in order to solve them efficiently and to give quick and correct responses to customer complains.

Features and functions enabled by the combination of the described components beyond prior art are:
- E2E monitoring of industrial applications with application endpoints in different network segments (cloud, IT, OT, edge)
- Measure and/or emulate industrial protocols and typical media access techniques used in industrial applications (e.g. prioritization, time-based scheduling, ...).
- Measurement probes (agents) are not only deployed in IT infrastructure, but also in the edge-layer and on PLC/IED.
- Deployment of components on PLC/IED level is not straight forward and are described by two methods addressing the special device architectures.
- The measurements and monitoring results of OT networks are visible and IT analysis tools offer combined visibility

The invention claims a system for end-to-end monitoring of services in a converged network comprising an industrial control network and an IT network, the system comprising:
- a measurement backend module,
- at least one process control component, comprising an OT data collection module which is designed
   - to monitor data packet streams exchanged between the process control component and devices it controls,
   - to capture measurement data and statistics of the monitored data packet streams and
   - to deliver the measurement data and the statistics to a data conversion module,
- at least one OT data collection configuration module, designed to define a principal working mode of the OT data collection module, and
- the data conversion module, designed
   - to collect the measurement data and the statistics from the OT data collection module for conversion according to a definable configuration and
   - to forward the converted measurement data and converted statistics to the measurement backend module for further processing.

Operational technology (OT) is hardware and software that detects or causes a change, through the direct monitoring and/or control of industrial equipment, assets, processes and events. The term has become established to demonstrate the technological and functional differences between traditional IT systems and Industrial Control Systems environment, the so-called "IT in the non-carpeted areas".

In a further embodiment of the system the process control component is a programmable logic controller.

A programmable logic controller (PLC) or programmable controller is an industrial digital computer which has been ruggedized and adapted for the control of manufacturing processes, such as assembly lines, or robotic devices, or any activity that requires high reliability, ease of programming and process fault diagnosis.

PLCs can range from small modular devices with tens of inputs and outputs (I/O), in a housing integral with the processor, to large rack-mounted modular devices with a count of thousands of I/O, and which are often networked to other PLC and SCADA systems.

Supervisory control and data acquisition (SCADA) is a control system architecture comprising computers, networked data communications and graphical user interfaces (GUI) for high-level process supervisory management, while also comprising other peripheral devices like programmable logic controllers (PLC) and discrete proportional-integral-derivative (PID) controllers to interface with process plant or machinery.

In a further embodiment of the system the OT data collection configuration module is designed to defines type of data to be monitored, data packet stream characteristics, industrial protocols, prioritization as well as the method for retrieving measured data points.

In a further embodiment of the system the data conversion module is an OPC data conversion module. OPC is the abbreviation for "Open platform communications".

In a further embodiment of the system the OT data collection module is designed to change the configuration of the process control component according to the objectives of a measurement campaign, so that the status of incoming and outgoing data packets, as well as the states of used links and protocols are captured during runtime.

In a further embodiment of the system the OT data collection module is designed so that the monitoring functionality is packaged as a self-contained organization block ready for configuration according to the OT data collection configuration module.

Thus, defined data stream characteristics can be generated according to the configuration, using the appropriate protocol settings (e.g. with respect to priorities) and timings. In addition, also measurements of incoming data packets are enabled, and data is forwarded to the corresponding OPC servers or measurement backend interfaces.

In a further embodiment of the system the OT data collection module is designed to collect diagnostic information provided by OT-protocol specific diagnostic functions of the devices.

E.g. using the standard diagnostic interface of automation components (= devices) which is normally used by e.g. engineering tools.

In a further embodiment the system additionally comprises:
- at least one edge device comprising:
   - a data collection module designed to take measurements, forward/relay measurement data and/or act as industrial application endpoint that creates additional data, and
   - a data collection configuration module designed to define the data types to be measured by the data collection module and the data stream characteristics to be generated in case of emulating the industrial application running on the edge device and producing additional data based on received data or forwarding measurement data.

In a further embodiment the system additionally comprises:
- a measurement campaign definition module, designed to define the objective of the measurement tasks of the measurement backend module.

In a further embodiment the system additionally comprises:
- a configuration orchestration module, designed to compute, based on the measurement campaign definition module, the number and deployment location of the different types of measurement agents to be used in the system and to create the OT data collection configuration module.

Furthermore, the invention claims an automated method, advantageous a computer implemented method, for end-to-end monitoring of services in a converged network comprising an industrial control network and an IT network, comprising:
- monitoring data packet streams exchanged between a process control component and devices it controls,
- capturing measurement data and statistics of the monitored data packet streams and
- delivering the measurement data and the statistics to a data conversion module,
   performed by an OT data collection module in a process control component,
- defining a principal working mode of the OT data collection module,
   performed by an OT data collection configuration module, and
- collecting the measurement data and the statistics from the OT data collection module for conversion according to a definable configuration and forwarding the converted measurement data and converted statistics to the measurement backend module for further processing,
   performed by a data conversion module.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of the system,
- FIG. 2: shows a block diagram of an embodiment of the system,
- FIG. 3: shows a block diagram of an embodiment of the system with PROFInet and
- FIG. 4: shows a block diagram of an embodiment of the system in a power and facility SCADA system.

### DETAILED DESCRIPTION OF THE INVENTION

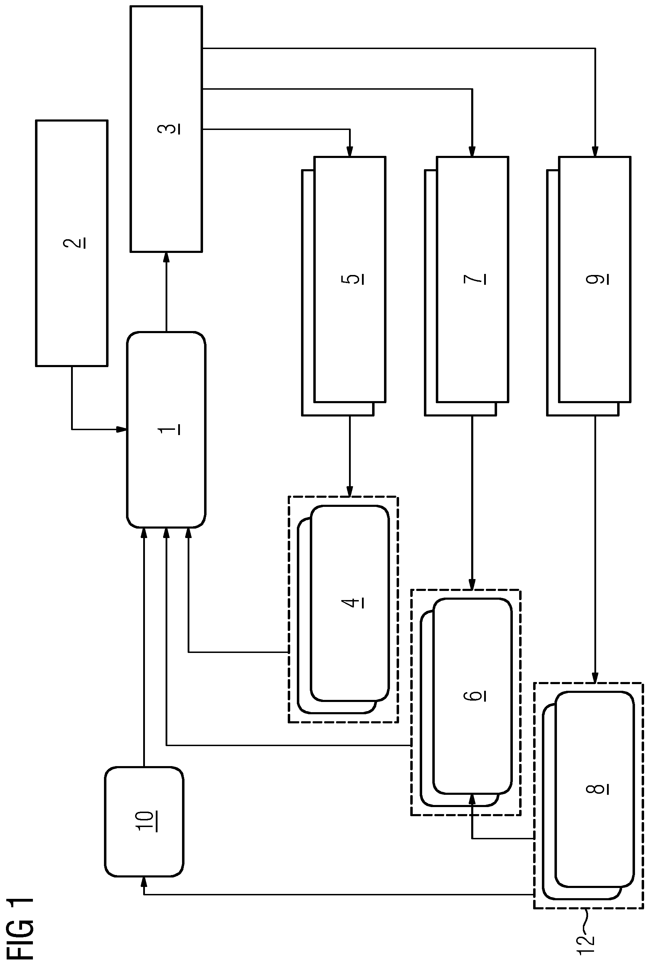

As an example of the invention FIG. 1 shows a block diagram of core components of the system. The core components of the system are as follows:
*Measurement backend module 1* allows the definition of the measurement campaign, triggers the configuration orchestration, collects data, aggregates data and hosts analytics.
*Measurement campaign definition module* 2 defines the objective of the measurement. For a complete assessment of an industrial service several data traffic characteristics, thresholds and types of data streams can be defined. The measurement campaign definition module also contains the set of involved service endpoints. In addition, also devices within the network can be selected (optionally) - either through a pre-defined set or dynamically, based on a selection algorithm (e.g., based on the used traffic routing pattern or based on automated learnings from operational data).
*Configuration orchestration module 3:* Based on the measurement campaign definition module 2, the configuration orchestration module 3 computes the number and deployment location of the different types of measurement agents to be used. Also, the required configurations are compiled. As soon as the agent specific configurations are created, agents and the corresponding configurations are deployed to the individual destinations in the IT/OT networks, as well as in the process automation network. The configuration orchestration module 3 creates all required agent Configuration modules, data Collection Configuration module, and OT data collection configuration modules.
*Industrial service measurement agent module* 4 typically runs on IT/OT equipment as virtual machine or agent software. It is enabled to receive and measure industrial application data packets. Measurements are either transmitted to the measurement backend or stored for later evaluation (depending on the agent configuration module 5). Industrial Service Measurement Agent module 4 can also inject data to the network - either to act as packet generator for the backchannel, or to represent additional data created based on the (measurement) data received.
*Agent configuration module 5:* All deployed Industrial Service Measurement Agent modules 4 require their own configuration that defines data traffic characteristics/data streams created and injected into the network, the type of data measured, the protocols/datagrams to be used, the storage locations for measurement data, as well as the triggers for starting the measurement campaign.
*Data collection module 6* is typically deployed on edge devices that allow for the execution of virtual instances, containers or micro services. A data collection module 6 takes measurements, can forward/relay measurement data or can act as industrial application endpoint that also creates additional data. Typically, edge devices act as "bridge" between data sets from the process automation network and connected application endpoints in IT or other OT networks. This behavior is provided by data collection modules 6 in the measurement setup.
*Data collector configuration module 7* is needed by data collection modules 6 and define the data types to be measured and the data stream characteristics to be generated in case of "emulating" an industrial application running on the edge device and producing additional data based on received data or forwarding measurement data.
*OT data collection module 8* is a special component, that allow monitoring of data packet streams and creating data packet streams on PLCs/IEDs. PLCs and IEDs do not allow for simple hosting of virtual instances, containers or individual Software pieces as they follow special operational paradigms according to industrial/process control devices. Therefore, the invention foresees different operational modes of measurement agents on PLCs/IEDs:
   - Mode 1 - Monitoring of an existing industrial/process automation application (see first embodiment below): The PLC configuration is changed according to the objectives of the measurement campaign, so that the status of incoming and outgoing data packets, as well as the states on the used links and protocols are captured during runtime.
   - Mode 2 - E2E Monitoring Building Block: As the programming of PLCs does not easily allow users to "run a monitoring agent", the monitoring functionality is packaged as self-contained Organization Block ready for configuration according to the OT Data Collection Configuration module 7. Thus, defined data stream characteristics can be generated according to the configuration, using the appropriate protocol settings (e.g. with respect to priorities) and timings. In addition, also measurements of incoming data packets are enabled, and data is forwarded to the corresponding OPC servers or measurement backend interfaces.
   - Mode 3 - collection of diagnostic information provided by OT-protocol specific diagnostic functions, e.g. using the standard diagnostic interface of automation components which is normally used by e.g. engineering tools.
*OT data collection configuration module 9* defines the principal working mode of the OT data Collection module 8 and defines the type of data to be monitored, the data packet stream characteristics, industrial protocols, prioritization as well as the method for retrieving the measured data points.
*OPC data conversion module 10:* An easy "built-in" method for PLCs to acquire data points is the use of an OPC server. This allows for easy collection of time series data and status variables, including time stamps. In order to make these types of data available for the E2E monitoring, industrial service measurement agent module 6 can be configured to act also as OPC data converter to extract relevant measurement points from PLCs that are stored in OPC servers and forward them to the measurement backend nodule for further processing, aggregation and consolidation with other measurement data of the corresponding measurement campaign.
*Passive monitoring module:* Above described different types of measurement agents (industrial service measurement agent module 4, data collection module 6, OT data collection module 8) can also be configured for passive monitoring and measurement. Here, all agents monitor the specified (through the corresponding configuration set) parameters/data/traffic characteristics and report their measurements to the measurement backend (either directly, or via OPC Data Conversion module 10). The measurement backend then aggregates the E2E view of the data streams of interest.

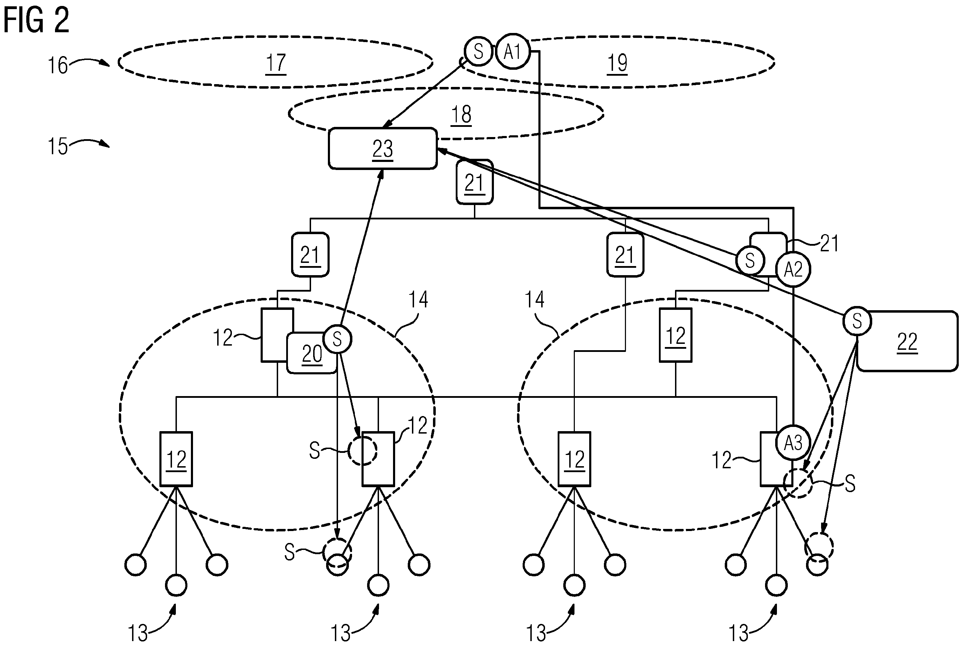

FIG. 2 shows a typical embodiment of the system in an industrial setup. PLCs/IEDs 12 communicate with sensors & actuators 13, OPC servers 20, SCADA server 21 and engineering stations 22 through the industrial/process automation network 14. An industrial application with endpoints A1, A2 and A3 should be monitored and the application endpoints are running in the enterprise cloud 19 (A1), the edge-layer 15 (A2) and in the industrial/process automation network 14 (A3).

For E2E monitoring of this industrial application the components of the system are deployed to the different network segments S. The following embodiments explain details of the different operational modes.

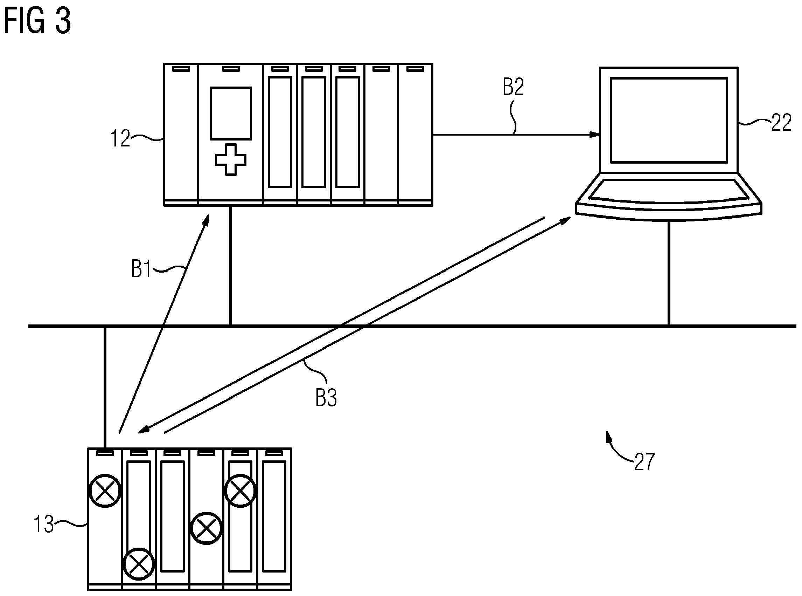

### First embodiment (FIG. 3) :

### Monitoring of an existing industrial/process automation application

According to this embodiment (FIG. 3), the agent-based monitoring solution known from IT networks is extended to OT networks. For many devices in OT networks, deployment of a monitoring agent is not feasible for following reasons:
1. On PLCs 12 it is possible to deploy own software, even monitoring software, but a typical PLC 12 does not support programming languages known from IT.
2. On field devices, so-called constrained devices, available computation power is very limited. These devices can be configured to a certain extent, but deployment of own software is not possible.
3. OT networks often use reserved resources to guarantee deterministic behaviour. Sending measurement data through a reserved channel would negatively influence OT communication. Sending measurement data through non-reserved resources in parallel to the reserved channel would principally work, but provide non-meaningful data, as measurement data would be treated different than OT data.

To enable E2E monitoring in an OT network, the invention makes use of monitoring data which are anyway available in an OT network. In the following, we give an example for an OT network based on PROFInet. However, this does not restrict the applicability of the invention report to PROFInet, rather the ideas are intended to be transferred to other OT protocols like e.g. TSN, SERCOS, Ethercat etc.

PROFInet specifies a considerable number of standardized diagnosis features, which can be supplemented by manufacturer specific ones. So, for example, a PROFInet IRT device observes the active topology, line delay to its neighbours, synchronization accuracy, send and receive times of IRT datagrams, state of redundancy mechanisms and many more.

For that, PROFInet devices do not add monitoring data to reserved channels, but directly observe cyclic data. Additionally, standard mechanisms like LLDP neighbour detection and PTP link delay measurement are used. Detected errors are sent to the PLC 12 via PROFInet alarms in the acyclic real-time channel (B1 in FIG. 3) and can be directly read from the device, e.g. using an engineering tool (B3 in FIG. 3). This opens two possible ways to integrate OT diagnosis into E2E monitoring solution:

### 1.) PLC-based

Alarms from devices, as well as internal alarms in the PLC itself, can be treated within the PLC Program. Special program blocks, so-called Alarm-OBs, SFCs and SFBs, are invoked, when an alarm occurs. Within these alarm program blocks the user is free how to treat the alarms. It is for example possible to
- write data in data blocks to make them accessible to other program modules,
- to write them into an OPC (UA) server,
- to send them to a higher-level agent or measurement backend through a proprietary or standardized TCP or UDP-based Ethernet protocol, e.g. REST or GOOSE and many more. The advantage of this solution is, that the alarm program blocks are immediately called when an alarm occurs, thus a reaction can be invoked very fast. The disadvantage is, that program code needs to be added to the PLC 12.

### 2.) Engineering-station based

If it is not possible or wanted to add code to the PLC 12, it is also possible to access diagnosis data through an engineering station 22. The engineering station 22 can either be notified about an alarm event through the PLC 12 (B2 in FIG. 3), or it can directly access devices and read diagnostic information (B3 in FIG. 3). For the latter, a layer-2-connection to the OT network is required. As communication between engineering station 22 and devices follows an open standard, it is possible to implement an agent, which appears as an engineering station in the OT network and provides data to the measurement backend.

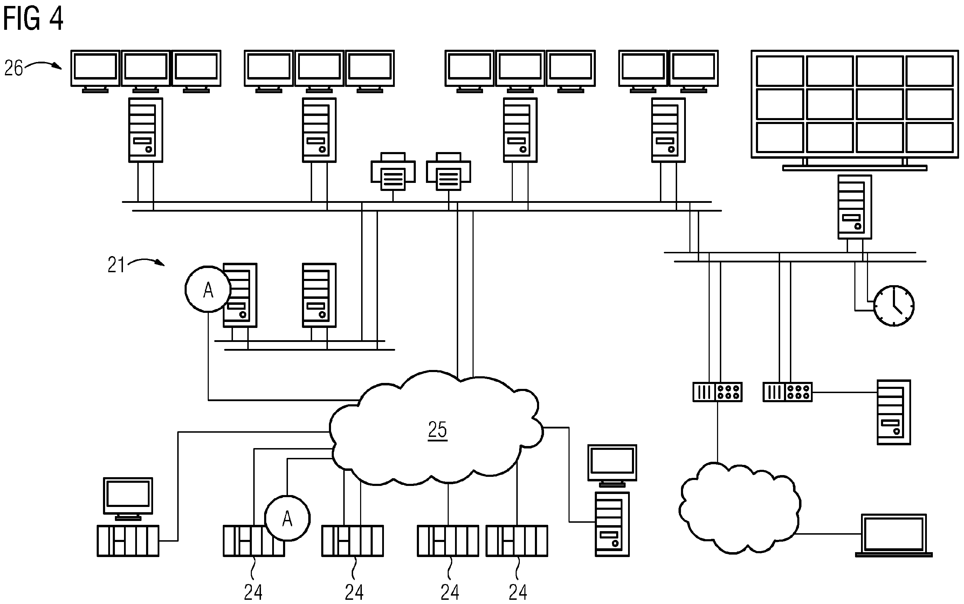

### Second embodiment (FIG. 4) :

### Use Case Power & Facility SCADA

RTUs 24 (Remote Terminal Units) transmit data from sensors and actuators to SCADA servers 21. Consoles 26 are used for management of the system and exchange data with the SCADA servers 21. RTUs 24 (PLC based or IED-based) may be passenger station controls, power sub-station control and auxiliary equipment controls. Data transfer between RTU 24 and servers 21 has to be done safe and predictable (both directions) and this data exchange is performed over an Ethernet communication network 25 (see FIG. 4).

The Ethernet communication network 25 shown in FIG. 4 is simplified and consists typically of several zones and/or separated networks. One of the biggest questions/challenges is now how to manage a safe and reliable data transfer between the SCADA applications over the Ethernet communication network 25, while these Ethernet communication networks 25 are often "grown" over history and are not in the sole responsibility of the SCADA supplier.

The present invention is used to solve the problem of assessing the application/service quality between the SCADA applications. Therefore, agents (see "A" in FIG. 4) are deployed on the RTUs 24 and ensure that the created application data stream is measured (Mode 2 - E2E Monitoring Building Block). The measurement can be done flexible by analysing the original data stream by capturing data or by creating a dedicated synthetic application test stream. The measurement campaign has a defined set of parameters and the given thresholds and/or behaviour of the data stream characteristics (e.g. packet transmission time, forwarding delay, packet loss) are monitored by the measurement agents. Deviations from expected behaviour of exceeding of thresholds are reported by the agents to the monitoring backend module.

This setup and agent deployment then can also be applied to wide area setups of Power and Facility SCADA systems.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: Measurement backend module
- 2: Measurement campaign definition module
- 3: Configuration orchestration module
- 4: Industrial service measurement agent module
- 5: Agent configuration module
- 6: Data collection module
- 7: Data collector configuration module
- 8: OT data collection module
- 9: OT data collection configuration module
- 10: OPC data conversion module
- 12: PLC
- 13: sensor & actor
- 14: process control network
- 15: edge layer
- 16: IT network
- 17: cloud/internet
- 18: enterprise IT
- 19: enterprise cloud
- 20: OPC server
- 21: SCADA Server
- 22: engineering station
- 23: Measurement backbone
- 24: RTU
- 25: Ethernet communication network
- 26: console

## Claims

1. System for end-to-end monitoring of services in a converged network comprising an industrial control network (27) and an IT network (16), the system comprising:
- a measurement backend module (1),
- at least one process control component (12), comprising an OT data collection module (8) which is designed
• to monitor data packet streams exchanged between the process control component (12) and devices (13) it controls,
• to capture measurement data and statistics of the monitored data packet streams and
• to deliver the measurement data and the statistics to a data conversion module (10),
- at least one OT data collection configuration module (9), designed to define a principal working mode of the OT data collection module (8), and
- the data conversion module (10), designed
• to collect the measurement data and the statistics from the OT data collection module (8) for conversion according to a definable configuration and
• to forward the converted measurement data and converted statistics to the measurement backend module (1) for further processing.

2. System according to claim 1, whereby the
process control component is a programmable logic controller (12) .

3. System according to claim 1 or 2, whereby the OT data collection configuration module (9) is designed to define type of data to be monitored, data packet stream characteristics, industrial protocols, prioritization as well as the method for retrieving measured data points.

4. System according to one of the previous claims, whereby the data conversion module is an OPC data conversion module (10) .

5. System according to one of the previous claims, whereby the OT data collection module (8) is designed to change the configuration of the process control component (12) according to the objectives of a measurement campaign, so that the status of incoming and outgoing data packets as well as the states of used links and protocols are captured during runtime.

6. System according to one of claims 1 to 4, whereby the OT data collection module (8)is designed so that the monitoring functionality is packaged as a self-contained organization block ready for configuration according to the instructions of the OT data collection configuration module (9).

7. System according to one of claims 1 to 4, whereby the OT data collection module (8) is designed to collect diagnostic information provided by OT-protocol specific diagnostic functions of the devices (13).

8. System according to one of the previous claims, whereby the system comprises:
- at least one edge device (15) comprising:
• a data collection module (6) designed to take measurements, forward/relay measurement data and/or act as industrial application endpoint that creates additional data, and
• a data collection configuration module (7) designed to define the data types to be measured by the data collection module (6) and the data stream characteristics to be generated in case of emulating the industrial application running on the edge device (15) and producing additional data based on received data or forwarding measurement data.

9. System according to one of the previous claims, whereby the system comprises:
- a measurement campaign definition module (2), designed to define the objective of the measurement tasks of the measurement backend module (1).

10. System according to claim 9, whereby the system comprises :
- a configuration orchestration module (3), designed to compute, based on the measurement campaign definition module (2), the number and deployment location of the different types of measurement agents to be used in the system and to create the OT data collection configuration module (9).

11. Automated method for end-to-end monitoring of services in a converged network comprising an industrial control network and an IT network (16), comprising:
- monitoring data packet streams exchanged between a process control component (12) and devices (13) it controls,
- capturing measurement data and statistics of the monitored data packet streams and
- delivering the measurement data and the statistics to a data conversion module (10),
performed by an OT data collection module (8) in the process control component (12),
- defining a principal working mode of the OT data collection module (8),
performed by an OT data collection configuration module (9), and
- collecting the measurement data and the statistics from the OT data collection module (8) for conversion according to a definable configuration and forwarding the converted measurement data and converted statistics to a measurement backend module (1) for further processing, performed by the data conversion module (10).
